# NEUE EUROPÄISCHE PATENTSCHRIFT

(11) **EP 0 208 217 B2**
(45) Veröffentlichungstag und Bekanntmachung des Hinweises auf die Entscheidung über den Einspruch: **15.03.1995**
(45) Hinweis auf die Patenterteilung: 06.09.1989
(21) Anmeldenummer: 86108825.0
(22) Anmeldetag: 28.06.1986
(51) Int. Cl.: C08F 2/32, C02F 1/54

(54) **Umweltfreundliche Flockungsmittelorganosole**
Flocculant organosol in harmony with the environment
Agents de floculation organosol non polluant

(30) Priorität: 12.07.1985 DE 3524950
(43) Veröffentlichungstag der Anmeldung: 14.01.1987
(73) Patentinhaber: Röhm GmbH, 64293 Darmstadt (DE)
(72) Erfinder: Schnee, Reiner, Dr., D-6100 Darmstadt (DE); Scordialo, Angelo, D-6102 Pfungstadt (DE); Masanek, Jürgen, D-6102 Pfungstadt (DE)

(56) Entgegenhaltungen:
- EP-A- 0 126 528
- EP-A- 0 130 962
- DE-C- 2 154 081
- US-A- 3 974 116
- CHEMICAL ABSTRACTS, Band 99, Nr. 10, September 1983, Seite 12, Zusammenfassung Nr. 71334s, Columbus, Ohio, US; RO-A- 75 667
- Applied and Environmental Microbiology, vol. 31, no. 5, May 1976, pp. 746-749

## Beschreibung

### Gebiet der Erfindung

Die Erfindung betrifft Flockungsmittelorganosole, die ein wasserlösliches oder in Wasser gelöstes Polymerisat, das im wesentlichen aus Acryl-und/oder Methacrylmonomeren aufgebaut ist, in feiner Verteilung in einer organischen Phase enthalten.

### Stand der Technik

Wasser-in-Öl-Emulsionen, z.B. von hochmolekularen Polyacrylamiden oder Acrylamidopolymeren haben als Flüssigprodukte mit hohen Feststoffgehalten und doch handhabbarer Viskosität, infolge der Umkehrbarkeit der Emulsion und der dabei möglichen Herstellung von wäßrigen Polymerisatlösungen und deren Anwendung, insbesondere als Flockungsmittel, z.B. zur Trinkwasseraufbereitung oder zur Klärung kommunaler und industrieller Abwässer, Bedeutung erlangt.

Verfahren zur Herstellung von Wasser-in-ÖI-Emulsionen hochmolekularer Verbindungen durch Polymerisation von wassergelösten äthylenisch ungesättigten Monomeren in einer Ölphase sind gut bekannt. Öle bei der Herstellung der polymerhaltigen Wasser-in-ÖI-Emulsionen sind flüssige, nicht wasserlösliche, organische Substanzen oder Substanzgemische. So kann nach der DE-A 1 081 228 die Ölphase aus jeder inerten hydrophoben Flüssigkeit bestehen, wozu bevorzugt Kohlenwasserstoffe und chlorierte Kohlenwasserstoffe, wie u.a. Toluol, Xylol, o-Dichlorbenzol und Propylendichlorid, gehören.

Nach der DE-B 2 154 081 können die Öle aus einer großen Gruppe von organischen Flüssigkeiten, z.B. flüssigen Kohlenwasserstoffen und substituierten flüssigen Kohlenwasserstoffen, wobei diese sowohl aromatische als auch aliphatische Verbindungen umfassen, ausgewählt werden. Als Beispiele solcher flüssiger Kohlenwasserstoffe werden Benzol, Xylol, Mineralöle, Kerosine, Naphthas und als besonders geeignet ein Öl auf Isoparaffinbasis genannt. Auch in der DE-A 2 226 143 werden zur Bildung der Ölphase die vorstehend genannten organischen Stoffe angegeben und die DE-B 2 432 699 weist als hydrophobes organisches Dispersionsmedium wiederum aromatische Kohlenwasserstoffe und aliphatische Kohlenwasserstoffe wie Paraffinöle und Perchloräthylen aus.

Die DE-A 3 302 069 beschreibt Präparate, die u.a. als Flockungsmittel verwendet werden, bei denen die Ölphase gegebenenfalls im Gemisch oder ausschließlich aus den schon vorstehend erwähnten aromatischen und aliphatischen Kohlenwasserstoffen, aus natürlichen vegetabilen oder tierischen Triglyceriden, wie z.B. Olivenöl, Erdnußöl, Cottonöl, Kokosfett, Rüböl, Sonnenblumenöl, und aus Fettsäuremonoestern, vornehmlich C₁ -₄-Alkylester von C1₂-₂₄-Fettsäuren, wie z.B. Ölsäure, Palmitinsäure, bestehen kann.

In den EP-A 45 720 und 80 976 sind Wasser-in-ÖI-Emulsionspolymerisate zur Verwendung in kosmetischen Mitteln beschrieben, die als Ölphase bei der Polymerisation hydrophobe, organische Flüssigkeiten wie z.B. aliphatische oder aromatische Kohlenwasserstoffe, Öle tierischer oder pflanzlicher Herkunft und die entsprechenden denaturierten Öle benötigen.

### Problem

Der Einsatz von organischen Flockungsmitteln auf der Basis von Wasser-in-ÖI-Emulsionen mit einer Ölphase aus aliphatischen und/oder aromatischen Kohlenwasserstoffen, z.B. in Kläranlagen, birgt infolge des Verbleibens des Öls im zu deponierenden Schlamm eine wachsende Gefahr für das Grundwasser und damit einer Trinkwasserkontaminierung in sich.

Dies hat seine Ursache darin, daß durch eine solche Abwasserbehandlung z.B. von einer Großstadt, täglich mehrere hundert Kilogramm Öl mit dem Klärschlamm abgelagert werden, und die aliphatischen und aromatischen Kohlenwasserstoffe durch Mikroorganismen nur in Gegenwart von Sauerstoff und dabei nur relativ langsam, abgebaut werden. Zur Ausräumung der Gefahr einer Verseuchung des Bodens mit den entsprechenden schwer abbaubaren Ölen, wird jetzt der Klärschlamm einer Flammenbehandlung unterzogen. Eine weitere Möglichkeit wäre der Einsatz von polymerhaltigen Wasser-in-ÖI-Emulsionen, bei denen die Ölphase aus biologisch besser abbaubaren Bestandteilen besteht, wie dies z.B. nach der oben genannten DE-A 3 302 069 der Fall ist. Das Herausbrennen des Öls aus dem Schlamm oder die Verwendung natürlicher pflanzlicher oder tierischer Öle und von C₁₂-₂₄-Fettsäuremonoestern als Ölphase verteuern jedoch die Flockung in den Kläranlagen beträchtlich. Neben einem mehrfachen Preis der nativen Öle gegenüber den Mineralölen, sind die Naturprodukte uneinheitlich und schwankend in ihrer Zusammensetzung, was sich auch auf die Qualität der Organosole und deren Verwendung als Flockungsmittel ungünstig auswirkt.

### Aufgabe und Lösung

Es bestand daher die Aufgabe, polymerhaltige Wasser-in-Öl-Emulsionen bereitzustellen, bei denen die kontinuierliche Ölphase aus Substanzen besteht, die biologisch wesentlich leichter abbaubar als die bisher verwendeten Kohlenwasserstofföle sind, die aber auch im Vergleich zu den natürlichen Ölen und Fetten wirtschaftlicher und mit reproduzierbaren Eigenschaften eingesetzt werden können.

Es wurde gefunden, daß aliphatische Dicarbonsäureester der Dicarbonsäuren der Formel HOOC(̵CH₂ )ₓCOOH mit x = 0 bis 8, die gegebenenfalls nach Hydrolyse, biologisch abgebaut werden, als Ölphase von polymerhaltigen Wasser-in-Öl-Emulsionen bei deren Herstellung und deren Verwendung hervorragend geeignet sind.

### Vorteile der Erfindung

Dicarbonsäureester und die zu deren Herstellung benötigten Dicarbonsäuren der Formel HOOC(̵CH₂ )ₓCOOH mit x = 0 bis 8 und monofunktionellen aliphatischen Alkohole, werden in großtechnischen Synthesen wirtschaftlich und mit gleichbleibender Qualität hergestellt und sind biologisch leicht abbaubar.

Der Abbau geht von den sauerstoffhaltigen Zentren des Moleküls, gegebenenfalls nach vorhergehender hydrolytischer Spaltung der Estergruppe, z.B. durch Enzyme katalysiert, aus, wobei sowohl die Kohlenstoffkette der Dicarbonsäure als auch die des Alkohols mikrobiell durch β-Oxidation soweit wie möglich abgebaut werden. Z.B. gilt Adipinsäure als ausgesprochen untoxisch, da sie im Organismus schnell verbrannt wird. Sie wird, nach bekannten Untersuchungen mit C-14-markierter Adipinsäure, wie normale Fettsäuren durch β-Oxidation im Organismus abgebaut.

Nach dem erfindungsgemäßen Verfahren hergestellte polymerhaltige Wasser-in-ÖI-Emulsionen sind z.B. als umweltfreundliche Flockungsmittelorganosole bei der Trinkwasseraufbereitung, bei Klärungen kommunaler und industrieller Abwässer, oder als umweltfreundliche Verflüssiger bei der Aufschlemmung von Bohrgesteinen, z.B. bei der Erdölsuche und -förderung einsetzbar.

### Ausführung der Erfindung

### 1. Die Ölphase

Nach dem erfindungsgemäßen Verfahren werden wasserlösliche Homo- und Copolymerisate durch Polymerisation von in Wasser gelösten äthylenisch ungesättigten Verbindungen in Emulsion hergestellt, wobei die wäßrige Phase in einer kontinuierlichen Ölphase dispergiert ist, die erfindungsgemäß wesentliche Mengen von aliphatischen Dicarbonsäureestern der Formel HOOC(̵CH₂ )ₓCOOH mit x = 0 bis 8 enthält. Der Anteil der Dicarbonsäureester in der Ölphase liegt bei mindestens 10 Gew.-%, vorteilhaft bei mindestens 50 Gew.-% und kann bis 100 Gew.-% dieser biologisch gut abbaubaren Verbindungen betragen. Neben den erfindungsgemäß einsetzbaren Dicarbonsäureestern kann die Ölphase noch solche Komponenten enthalten, die nach dem Stand der Technik als Ölphase für polymerhaltige Wasser-in-Öl-Emulsionen bekannt sind. Solche Komponenten sind insbesondere aliphatische Kohlenwasserstoffe, tierische bzw. pflanzliche Öle und Fette und Fettsäuremonoester.

Als Dicarbonsäurekomponenten der Formel HOOC(̵CH₂)̵ₓCOOH mit x = 0 bis 8 der erfindungsgemäß einsetzbaren aliphatischen Dicarbonsäureester kommen z.B. Oxalsäure, Malonsäure, Bernsteinsäure, Glutarsäure, Adipinsäure, Pimelinsäure, Korksäure, Azelainsäure, oder Sebacinsäure, in Frage. Auch das unter dem Namen Isosebacinsäure im Handel erhältliche C₁₀-Dicarbonsäure- gemisch kann Grundlage für erfindungsgemäß brauchbare Dicarbonsäureester sein. Bevorzugte Säuren sind Adipinsäure und Sebacinsäure.

Die alkoholischen Komponenten der aliphatischen Dicarbonsäureester sind aliphatische monofunktionelle Alkohole mit 1 bis 20 C-Atomen wie z.B. Methanol, Äthanol, Isopropanol, n-Butanol, Isobutanol, 2-Äthylhexanol, 1-Decanol, 1-Undecanol 1-Dodecanol, 1-Hexadecanol, 1-Octadecanol. Isodecanol oder Isotridecanol/2-Äthylhexanol, das durch Aldol-Kondensation von aus der Oxonsynthese gewonnenen n-Butyraldehyd mit anschließender Hydrierung hergestellt wird, ist eine bevorzugte alkoholische Komponente.

Ester von Dicarbonsäuren mit monofunktionellen Alkoholen finden technisch als Weichmacher oder Schmiermittel Verwendung. Die hierzu am häufigsten benutzten Ester, sind die von Adipin-, Azelain- und Sebacinsäure vor allem mit Oxo-Alkoholen oder Alfolen@ , die bei ihrer technischen Herstellung als Gemische verschiedener Alkohole erhalten werden. Die technische Herstellung dieser Alkohole ist beispielsweise in Ullmanns Encyklopädie der technischen Chemie, 4. Auflage, Band 7, Seiten 203 bis 223, beschrieben. Es ist daher auch ein Gegenstand der Erfindung, in der Technik als Esteröle bekannte Schmiermittel, die aus aliphatischen Dicarbonsäuren der Formel HOOC(̵CH₂ )̵ₓCOOH mit x = 0 bis 8 und monofunktionellen aliphatischen Alkoholen als Ester gewonnen werden, als Ölphase von Flockungsmittelorganosolen und bei deren Herstellung zu verwenden.

Beispiele von erfindungsgemäß verwendbaren Dicarbonsäureestern, die auch als Esteröle bekannt sind, sind Bis-(2-äthylhexyl)-sebacat, Bis(2-äthyl- hexyl)-adipat, Bis-(C₈-oxoalkohol)-azelainat, Bis-(C₈-oxoalkohol)-adipat, Bis-(3, 5, 5-trimethylhexyl)-adipat. Weitere Beispiele brachbarer Dicarbonsäureester sind Bernsteinsäuredidodecylester, Adipinsäuredipropylester, Pimelinsäure-di-2-äthylhexyle- ster. Die Dicarbonsäureester können auch als Gemische verschiedener Verbindungen eingesetzt werden, wobei sowohl die Dicarbonsäurekomponenten und/oder auch die Alkoholkomponenten der Ester verschieden sein können. Technische Gemische solcher Dicarbonsäureester sind meistenteils die erwähnten Esteröle.

Die kontinuierliche Phase der Wasser-in-ÖI-Emulsion, nämlich die dicarbonsäureesterhaltige Ölphase ist in Mengen von 20 bis 60 Gew.-% sowohl während der Polymerisation der Monomeremulsion als auch in der anzuwendenden Dispersion vorhanden.

### 2. Die Monomeren

Nach dem erfindungsgemäßen Verfahren werden Homo- und Copolymerisate hergestellt, die als Flockungsmittel die Absetzgeschwindigkeit von in Wasser suspendierten Feststoffen erhöhen. Monomere zur Herstellung solcher Polymerisate sind Verbindungen, die vor allem in Wasser bzw. in der wäßrigen Monomerphase löslich sind und eine äthylenisch ungesättigte, polymerisationsfähige Doppelbindung haben. Beispiele von solchen Monomeren sind Acrylsäure, Methacrylsäure, Alkalisalze von Acrylsäure und Methacrylsäure, die Ammoniumsalze der beiden genannten Säuren, Acrylamid, Methacrylamid, N-substituierte Amide wie Methylmethacrylamid, Acrylamido- und Methacrylamidoalkylsulfonsäuren und ihre Salze, wie 2-Acrylamido-2-methylpropansulfonsäure, unter ihrem Handelsnamen «AMPS» (Lubrizol Corporation) bekannt, oder deren Natrium- bzw. Ammoniumsalz. Weitere wasserlösliche Monomere für die erfindungsgemäße Herstellung von polymerhaltigen Wasser-in-Öl-Emulsionen sind Acryl- und Methacrylester von Aminoalkoholen, wie z.B. Dimethylaminoäthylmethacrylat, die auch in neutralisierter oder quaternierter Form zur Polymerisation eingesetzt werden. Weitere brauchbare wasserlösliche Monomere sind Hydroxyalkylacrylate und -methacrylate wie z.B. Äthylenglykolmonoacrylat und 2-Hydroxypropylmethacrylat. Auch a, β-ungesättigte Monomere, die nicht der Acryl- bzw. Methacrylreihe angehören und in der Wasserphase löslich sind, wie Maleinsäure oder Vinylsulfonsäure oder Vinylbenzolsulfonsäure oder deren Alkali- und Ammoniumsalze oder N-Vinylpyrrolidon sind in dem erfindungsgemäßen Verfahren als polymerisierbare Verbindungen einsetzbar.

Bevorzugte Monomere sind Acrylamid, Methacrylamid, «AMPS», Natriumacrylat, Natriummethacrylat, Ammoniumacrylat, 2-Dimethylaminoäthylmethacrylat-hydrochlorid, 2-Trimethylammonium- äthylmethacrylat-chlorid, 2-Trimethylammonium- äthylacrylat-chlorid, N-Trimethylammoniumpropylmethacrylamid-chlorid und die entsprechenden Trimethylammoniummethosulfate. Vorwiegend als Flockungsmittel eingesetzte Acrylamidcopolymerisate enthalten eines oder mehrere Comonomere in Mengen von 2 bis 80 Gew.-% des Gesamtpolymeren.

### 3. Dispergier- und Netzmittel

Für die Dispergierung der wäßrigen Monomerlösung in der kontinuierlichen Ölphase werden Wasser-in-ÖI-Emulgatoren mit HLB-Werten von 1 bis 10, bevorzugt von 2 bis 8 verwendet (das Atlas-HLB-System, Atlas Chemie GmbH, EC10G Juli 1971. HLB-System, Römpps Chemie-Lexikon, 8. Auflage, S. 1715, Frankh'sche Verlagshandlung Stuttgart). Polymere Emulgatoren sind in der DE-C 2 412 266 beschrieben. Andere bekannte Emulgatoren sind z.B. Sorbitanmonostearat, Sorbitanmonooleat. Die Emulgatoren werden in Mengen von 0,1 bis 30, vorzugsweise von 1 bis 15 Gew.-%, bezogen auf die Gesamtemulsion, der Ölphase zugesetzt. Die Sedimentationsstabilität der polymerhaltigen Wasser-in-Öl-Emulsionen wird durch Zusatz von 0,1 bis 10 Gew.-% eines Netzmittels zur zu polymerisierenden Emulsion, dessen HLB-Wert über 10 liegt, verbessert. Dazu werden hydrophile, wasserlösliche Produkte, z.B. äthoxylierte Alkylphenole, wie äthoxyliertes Nonylphenol mit einem Äthoxylierungsgrad von 5 bis 30, oder auch Seifen von Fettsäuren mit 10 bis 22 Kohlenstoffatomen verwendet. Das Netzmittel wird üblicherweise in der organischen Phase gelöst oder suspendiert, kann aber auch der Wasserphase oder der fertigen Polymer-Wasser-in-Öl-Emulsion zugesetzt werden.

Der für die Umkehrung der Polymeremulsion in eine wäßrige Lösung und deren Anwendung nach DE-C 2 238 017 und DE-A 3 210 752 vorteilhafte Zusatz wasserlöslicher Säuren, wie z.B. Adipinsäure oder diese im Gemisch mit anderen Säuren, kann wie dort beschrieben schon bei der Herstellung des Organosols zugegeben werden.

### 4. Die Polymerisation

Der Anteil an wäßriger, dispergierter Phase an der Monomer-Wasser-in-Öl-Emulsion liegt im Bereich von 40 bis 80 Gew.-%, wobei der Anteil der wasserlöslichen Monomeren dieser Phase im Bereich von 20 bis 85 Gew.-% liegt und vorzugsweise 50 bis 80 Gew.-% beträgt.

Die Polymerisation der Monomeren wird in Gegenwart der üblichen Polymerisationsinitiatoren durchgeführt. Beispielsweise verwendet man Peroxide wie Dibenzoylperoxid, Dilauroylperoxid, Wasserstoffperoxid, Ammoniumpersulfat, oder Azoverbindungen wie Azodiisobutyronitril oder Redoxsysteme wie Ammoniumpersulfat/Ferrosulfat, Dibenzoylperoxid/N, N-Dimethyl-p-toluidin. Die Polymerisationstemperatur ist abhängig von dem verwendeten Initiator. Sie kann im Bereich von 5 bis etwa 100_{°}C liegen. Vorteilhaft polymerisiert man mit einem Redoxsystem zu wenigen Umsatzprozenten an und polymerisiert dann mit einem, z.B. peroxidischen, Initiator, der auch Teil des Redoxsystems gewesen sein kann, bei höheren Temperaturen zu Ende.

### Beispiel 1

In eine Monomeremulsion, die durch Vermischen einer wäßrigen Monomerphase der Zusammensetzung:
83,9 g Acrylamid 195,6 g 2-Trimethylammoniumäthylmethacrylatchlorid
54,9 g destilliertes Wasser
14,4 g Gemisch aus ca. 45 Gew.-% Glutarsäure, ca. 35 Gew.-% Adipinsäure und ca. 20 Gew.-% Bernsteinsäure
und einer Ölphase der Zusammensetzung:
205,2 g Bis-(2-äthylhexyl)-adipat (Handelsprodukt Vestinol @ OA der Chemischen Werke Hüls AG) 21 g polymerer Emulgator nach DE-C 2 412 266 bestehend aus einem Mischpolymerisat aus 30 Gew.-% Dimethylaminoäthylmethacrylat und 70 Gew.-% eines Gemisches aus C₁₀-C₂₀-Alkylmethacrylaten
unter Rühren hergestellt wird, und die durch Stickstoffspülung von gelöstem Sauerstoff weitgehend befreit ist, werden bei 20 bis 30°C nacheinander unter weiterem Rühren 0,013 g Ammoniumpersulfat als 1 %ige wäßrige Lösung und 0,012 g FeS0₄ als 1 %ige wäßrige Lösung zugegeben. Die Temperatur der Emulsion steigt auf 35 bis 41 _{°} C an. Bei dieser Temperatur werden nochmals in der oben beschriebenen Weise die gleichen Mengen Ammoniumpersulfat und FeS0₄ zugegeben. Das Polymerisationsende wird durch Konstantbleiben der Emulsionstemperatur mit der Badtemperatur angezeigt.

Die Polymeremulsion wird über ein Drahtnetz filtriert. Sie ist selbstumkehrend und die Viskosität einer 1 %igen wäßrigen Lösung beträgt 9000 mPas.

### Beispiel 2

Eine Monomeremulsion aus einer wäßrigen Monomerphase entsprechend Beispiel 1 und einer Ölphase der Zusammensetzung:
138,2 g Bis-(2-äthylhexyl)-adipat (Vestinol @ OA) 52,7 g Talgfettsäuremethylester
35,3 g polymerer Emulgator entsprechend Beispiel 1
wird nach Begasung mit Stickstoff analog Beispiel 1 in einem Temperaturbereich von 40 auf 55 °C ansteigend polymerisiert. Es wird nach Filtration über einem Drahtnetz eine Polymeremulsion mit einer Viskosität von 4400 mPas erhalten, die selbstumkehrend ist und eine Viskosität der 1 %igen wäßrigen Lösung von 6600 mPas aufweist.

### Beispiel 3

Einer aus der wäßrigen Monomerphase der Zusammensetzung:
168 g 2-Trimethylammoniumäthylmethacrylatchlorid
102 g Wasser
12,4 g des in Beispiel 1 angegebenen Dicarbonsäuregemisches
und der Ölphase der Zusammensetzung:
138,2 g Mineralöl (Shell-ÖI G 07)
35,2 g Bis-(2-äthylhexyl)-adipat (Vestinol @ OA) 17,6 g Isodecanol
35 g polymerer Emulgator entsprechend Beispiel 1 hergestellte Monomeremulsion, werden nach Stickstoffspülung unter weiterem Rühren, 0,31 g Ammoniumpersulfat als 1 %ige wäßrige Lösung bei 40 °C zugegeben. Die Polymerisation wird bei Temperaturen von 45 bis 48°C durchgeführt. Zur Endpolymerisation werden nochmals 0,31 g Ammoniumpersulfat als 1 %ige wäßrige Lösung und dann noch 0,005 g FeS0₄ ebenfalls als 1 %ige wäßrige Lösung zugesetzt.

Die Viskosität des erhaltenen Organosols beträgt 1750 mPas. Es ist selbstumkehrend mit einer Viskosität der 1 %igen wäßrigen Lösung von 7500 mPas.

## Patentansprüche

1. Umweltfreundliches Flockungsmittelorganosol bestehend aus
1) einer zusammenhängenden, mit Wasser nicht unbegrenzt mischbaren organischen Phase,
2) einer darin fein verteilten wasserhaltigen Polymerisatphase, die im wesentlichen aus Acryl- und/oder Methacrylmonomeren aufgebaut ist,
3) einem oder mehreren Dispergiermitteln,
4) gegebenenfalls Emulsionsstabilisatoren, dadurch gekennzeichnet, daß die organische Phase mindestens 10 Gew.-%, vorzugsweise mindestens 50 Gew.-% wenigstens eines aliphatischen Dicarbonsäureesters der Dicarbonsäuren der Formel HOOC-(CH₂)ₓ₋COOH, mit X = 0 bis 8, enthält.

2. Umweltfreundliches Flockungsmittelorganosol nach Anspruch 1, dadurch gekennzeichnet, daß die Dicarbonsäureester Ester der Adipinsäure, Azelainsäure und Sebacinsäure sind.

3. Umweltfreundliches Flockungsmittelorganosol nach den Ansprüchen 1 und 2, dadurch gekennzeichnet, daß die Dicarbonsäureester Produkte der Oxosynthese und/oder der Alfolsynthese als Alkoholkomponenten enthalten.

4. Umweltfreundliches Flockungsmittelorganosol nach den Ansprüchen 1 bis 3, dadurch gekennzeichnet, daß sie als Dicarbonsäureester Gemische verschiedener Dicarbonsäuren und/oder verschiedener Alkohole enthalten.

5. Umweltfreundliches Flockungsmittelorganosol nach den Ansprüchen 1 bis 4, dadurch gekennzeichnet, daß sie als Dicarbonsäureester die technisch als Esteröle bekannten Produkte enthalten.

6. Umweltfreundliches Flockungsmittelorganosol nach den Ansprüchen 1 bis 3, dadurch gekennzeichnet, daß die Dicarbonsäureester Ester der Adipinsäure sind.

7. Umweltfreundliches Flockungsmittelorganosol nach Anspruch 6, dadurch gekennzeichnet, daß der Dicarbonsäureester Adipinsäure Bis-(2-äthylhexyl)-adipat ist.

8. Verfahren zur Herstellung von umweltfreundlichen Flockungsmittelorganosolen nach den Ansprüchen 1 bis 7 durch Polymerisation einer monomerhaltigen Wasser-in-Öl-Emulsion, die noch Dispergiermittel, ggf. Emulsionsstabilisatoren und ggf. wasserlösliche Säuren enthält, dadurch gekennzeichnet, daß die Polymerisation in einer Wasser-in-Öl-Emulsion, deren organische Phase mindestens 10 Gew.-% wenigstens eines aliphatischen Dicarbonsäureesters enthält, durchgeführt wird.

## Claims

1. Environmentally acceptable flocculant organosol consisting of
1) a coherent organic phase which is not unrestrictedly miscible with water,
2) a water-containing polymer phase finely divided therein consisting essentially of acrylic and/or methacrylic monomers,
3) one or more dispersants, :
4) optionally emulsion stabilisers,
characterised in that the organic phase contains at least 10% by weight, preferably at least 50% by weight, of at least one aliphatic dicarboxylic acid ester of dicarboxylic acids of : formula HOOC-(CH₂)ₓ-COOH, wherein X = 0 to 8.

2. Environmentally acceptable flocculant organosol according to claim 1 characterised in that the dicarboxylic acid esters are esters of adipic, azelaic and sebacic acid.

3. Environmentally acceptable flocculant organosol according to claims 1 and 2, characterised in that the dicarboxylic acid esters contain products of oxosynthesis and/or Alfol synthesis as alcohol components.

4. Environmentally acceptable flocculant organosol according to claims 1 to 3, characterised in that they contain as dicarboxylic acid esters mixtures of different dicarboxylic acids and/or different alcohols.

5. Environmentally acceptable flocculant organosol according to claims 1 to 4, characterised in that they contain as dicarboxylic acid esters the products which are known industrially as ester oils.

6. Environmentally acceptable flocculant organosol according to claims 1 to 3, characterised in that the dicarboxylic acid esters are esters of adipic acid.

7. Environmentally acceptable flocculant organosol according to claim 6, characterised in that the dicarboxylic acid ester is adipic acid bis-(2-ethylhexyl)-adipate.

8. Process for preparing environmentally acceptable flocculant organosols according to claims 1 to 7 by polymerisation of a monomer-containing water-in-oil emulsion which also contains dispersants, optionally emulsion stabilisers and optionally water-soluble acids, characterised in that the polymerisation is carried out in a water-in-oil emulsion, the organic phase of which contains at least 10% by weight of at least one aliphatic dicarboxylic acid ester.

## Revendications

1. Organosol floculant non polluant, constitué
1) d'une phase organique continue, ne présentant pas une miscibilité illimitée à l'eau;
2) d'une phase polymère contenant de l'eau, finenent divisée dans la phase ci- dessus, constituée pour l'essentiel de mononères acryliques et/ou méthacryliques,
3) d'un ou plusieurs dispersants,
4) éventuellement de stabilisants d'émulsion,
caractérisé en ce que la phase organique contient au coins 10% en poids, de préférence au moins 50% en poids d'au moins un ester d'un acide dicarboxylique aliphatique de formule HOOC-(CH₂)ₓ-COOH, avec x = 0 à 8.

2. Organosol floculant non polluant selon la revendication 1, caractérisé en ce que les esters d'acides dicarboxyliques sont les esters de l'acide adipique, de l'acide azélaïque et de l'acide sébacique.

3. Organosol floculant non polluant selon les revendications 1 ou 2, caractérisé en ce que les esters d'acides dicarboxyliques contiennent des produits de la synthèse oxo et/ou de la synthèse AIfol^{(R)} en tant que composant alcool.

4. Organosol floculant non polluant selon les revendications 1 à 3, caractérise en ce qu'il contient comme esters d'acides dicarboxyliques des mélanges de différents acides dicarboxyliques et/ou différents alcools.

5. Organosol floculant non polluant selon les revendications 1 à 4, caractérisé en ce qu'il contient comme esters d'acides dicarboxyliques les produits connus dans la technique sous la désignation "esters-huiles".

6. Organosol floculant non polluant selon les revendications 1 à 3, caractérisé en ce que les esters d'acides dicarboxyliques sont les esters de l'acide adipique.

7. Organosol floculant non polluant selon la revendication 6, caractérisé en ce que l'ester d'acide dicarboxylique est l'adipate de bis-(2- éthylhexyle).

8. Procédé pour la préparation d'organosols flo- culants non polluants selon les revendications 1 à 7, par polymérisation d'une émulsion eau dans l'huile contenant des monomères, et contenant encore des dispersants, éventuellement des stabilisants d'émulsion et éventuellement des acides solubles dans l'eau, caractérisé en ce que la polymérisation est mise en oeuvre dans une émulsion eau dans l'huile dont la phase organique contient au moins 10% en poids d'au moins un ester d'acide dicarboxylique aliphatique.
